# EUROPÄISCHE PATENTSCHRIFT

(11) **EP 4 075 038 B1**
(45) Veröffentlichungstag und Bekanntmachung des Hinweises auf die Patenterteilung: **26.06.2024**
(21) Anmeldenummer: 22165974.1
(22) Anmeldetag: 31.03.2022
(51) Int. Cl.: F16L 11/15, H02G 3/04

(54) **INSTALLATIONSROHR**
INSTALLATION PIPE
TUBE D'INSTALLATION

(30) Priorität: 16.04.2021 DE 102021109695
(43) Veröffentlichungstag der Anmeldung: 19.10.2022
(73) Patentinhaber: Fränkische Rohrwerke Gebr. Kirchner GmbH + Co KG, 97486 Königsberg/Bayern (DE)
(72) Erfinder: WALTER, Lisa, 96052 Bamberg (DE); JAHN, Matthias, 95191 Leupoldsgrün (DE); HOFMANN, Thomas, 74196 Neuenstadt (DE)
(74) Vertreter: Weickmann & Weickmann PartmbB

(56) Entgegenhaltungen:
- DE-A1-102012 112 280
- DE-U1- 20 218 680
- JP-A- 2005 176 561
- US-A1- 2014 027 002

## Beschreibung

Die vorliegende Erfindung betrifft ein Wellrohr aus Kunststoff, welches in seinem Inneren einen Kanal definiert.

Derartige Wellrohre werden beispielsweise als Installationsrohre verwendet, wobei das Installationsrohr in einer Wand oder einer Betondecke verlegt wird und in seinem Inneren einen Kabelkanal definiert, durch welchen nachträglich Kabel, wie zum Beispiel Strom- oder Multimedia-Kabel, verlegt werden können. Dabei ist es auch bekannt, spezifische Produkteigenschaften, wie Herstellungsdatum, Materialangaben oder Herstellerangaben, direkt auf dem Produkt festzuhalten und somit für Dritte lesbar zu machen. Diese Informationen können auch mit einer digital auslesbaren Codierung wie einem QR oder Barcode, auf dem Produkt aufgebracht sein, wobei sich die Informationen mittels eines Scanners auslesen lassen.

Dabei werden die Rohre üblicherweise mittels Extrusionsverfahrens bzw. Korrugationsverfahrens hergestellt und unter Verwendung eines Tintenstrahldruckers bedruckt. Diese Bedruckung hat jedoch den Nachteil, dass, insbesondere bei einer Bedruckung mit einer Codierung, die Produktionsgeschwindigkeit stark gedrosselt werden muss, um eine für einen Scanner ausreichend lesbare Qualität der Markierung zu erreichen. Dies führt in aller Regel zu erhöhten Produktionskosten.

Aus dem Dokument US 2014/027002 A1, welches als nächstliegender Stand der Technik erachtet wird, ist ein Wellrohr aus Kunststoff bekannt, welches an seiner Außenseite eine Mehrzahl von Markierungen aufweist. Ferner sei auf die Dokumente JP 2005 176561 A, DE 202 18 680 U1 und DE 10 2012 112280 A1 hingewiesen.

Es ist daher eine Aufgabe der vorliegenden Erfindung, ein Wellrohr bereitzustellen, welches auch bei einer hohen Produktionsgeschwindigkeit mit einer gut auslesbaren Markierung versehen werden kann.

Diese Aufgabe wird durch ein Wellrohr gemäß Anspruch 1 gelöst.

Die Erfinder der vorliegenden Erfindung haben herausgefunden, dass es zum korrekten Auslesen von Markierungen an dem Wellrohr unter Verwendung eines Scanners ausreichend ist, wenn diejenigen Abschnitte der Wandung des Wellrohrs mit einer Markierung versehen sind, welche im Wesentlichen parallel zu der Haupterstreckungsrichtung des Kanals verlaufen, das heißt die Wellenberge und die Wellentäler, jedoch nicht die schräg verlaufenden Flanken. Je nachdem, wie das Profil der Wandung des Wellrohrs ausgebildet ist, können Übergänge, zum Beispiel Verrundungen, zwischen einer Flanke und einem daran angrenzenden Wellenberg bzw. Wellental dem Wellenberg bzw. dem Wellental zugeordnet werden, und demzufolge zumindest teilweise mit einer entsprechenden Markierung versehen sein, oder können der Flanke zugeordnet werden, und demzufolge frei von einer entsprechenden Markierung sein. Wie voranstehend durch den Ausdruck "zumindest teilweise" ausgedrückt ist, kann ein jeweiliger Übergang auch in einem ersten Abschnitt einer Flanke und in einem zweiten Abschnitt einem Wellenberg bzw. einem Wellental zugeordnet werden, und demzufolge lediglich in dem zweiten Abschnitt eine entsprechende Markierung aufweisen.

Diese Erkenntnis ermöglichte zum einen die Abkehr von dem derzeitigen Bedruckungsverfahren von Wellrohren unter Verwendung eines Tintenstrahldruckers und zum anderen die Verwendung alternativer Beschriftungsverfahren, welche beispielsweise aufgrund von Oberflächenreflexionen technisch zwar nicht dazu geeignet sind, die Flankenabschnitte des Wellrohrs zu bedrucken, welche es aber ermöglichen, die Geschwindigkeit der Herstellung von Wellrohren trotz des Aufbringens von Markierungen signifikant zu steigern. Dabei resultiert eine Erhöhung der Produktionsgeschwindigkeit üblicherweise auch in einer Reduktion der Herstellkosten. So kann sich auch die Taktung des Bedruckens auf gewünschte Anforderungen anpassen lassen.

Erfindungsgemäß erstreckt sich eine jeweilige Markierung in axialer Richtung des Wellrohrs über wenigstens einen Wellenberg und wenigstens ein Wellental und in Umfangsrichtung des Wellrohrs wenigstens abschnittsweise. In Bezug auf die axiale Erstreckung der Markierung haben die Erfinder erkannt, dass es ausreichend ist, wenn sich die Markierung lediglich über einen Wellenberg oder lediglich über ein Wellental erstreckt, damit ein Scanner die Informationen aus der Markierung auslesen kann. Um aber auch in dem Fall, in welchem das Wellrohr durch den markierten Wellenberg oder durch das markierte Wellental geschnitten werden sollte, weiterhin eine auslesbare Markierung bereitstellen zu können, wird vorgeschlagen, dass sich eine jeweilige Markierung über wenigstens einen Wellenberg und wenigstens ein Wellental erstreckt. Aufgrund der Umfangskrümmung des Wellrohres kann die Bedruckung derart angepasst werden, dass die Projektion einer Markierung auf das Wellrohr einem 2-dimensionalen Abbild davon entspricht.

Die digital auslesbare Codierung kann einen Barcode umfassen. Dabei kann es vorteilhaft sein, wenn der Barcode derart auf dem Wellrohr angebracht ist, dass sich die Balken des Barcodes im Wesentlichen in der axialen Richtung des Wellrohrs, das heißt im Wesentlichen parallel zu der Haupterstreckungsrichtung des Wellrohrs, erstrecken. Natürlich ist es auch denkbar, dass eine jeweilige Markierung eine Mehrzahl verschiedener Codetypen umfasst, wie beispielsweise einen Barcode und eine Zahl.

Dabei kann wenigstens einer der Balken des Barcodes aus einer Mehrzahl von Einzellinien zusammengesetzt sein. Dies kann beispielsweise dadurch erkannt werden, dass ein Balken des Barcodes Lücken aufweist, das heißt Stellen innerhalb eines Balkens des Barcodes, an welchen die ursprüngliche Farbe des Wellrohrs zu erkennen ist. Ferner kann dies beispielsweise auch dadurch erkannt werden, dass ein Balken des Barcodes an wenigstens einem axialen Ende nicht einheitlich abschließt, sondern fingerartig in einzelnen Linien ausläuft.

Erfindungsgemäß werden die Markierungen unter Verwendung eines Laserbeschriftungsverfahrens aufgebracht. Insbesondere wenn ein Laserstrahl einer Laserbeschriftungsvorrichtung im Wesentlichen orthogonal zu der Haupterstreckungsrichtung des Wellrohrs ausgerichtet ist, kann eine Oberflächenreflexion im Bereich von Flanken so groß sein, dass die Energie, welche von dem Laserstrahl in das Material des Wellrohrs eingebracht wird, nicht ausreichend hoch ist, um das Material in diesem Bereich derart umzuwandeln, dass die Markierung erzeugt werden kann. Eine Markierung, welche unter Verwendung eines Laserbeschriftungsverfahrens aufgebracht ist, kann ferner den Vorteil aufweisen, dass die Markierung unverlierbar, zum Beispiel nicht abwischbar, auf dem Wellrohr aufgebracht ist. Entsprechend der Position der Laserlichtquelle zu der Oberfläche des Wellrohrs, kann die Markierung auf das Wellrohr projiziert werden. Dabei kann die Laserlichtquelle in Umfangsrichtung des Wellrohrs bewegt werden, um auch in den Randbereichen eine ausreichend hohe Genauigkeit der Markierung zu erreichen und/oder die Markierung kann bereits als Datensatz derart angepasst werden, dass eine Verzerrung zum Rand der Markierung hin (in Umfangsrichtung des Wellrohrs betrachtet) berücksichtigt und beim tatsächlichen Erzeugen der Markierung auf dem Wellrohr kompensiert wird. In einer Weiterbildung der vorliegenden Erfindung kann eine jeweilige Markierung entlang der Umfangsrichtung des Wellrohrs eine Erstreckung von zwischen 10 mm und 20 mm, insbesondere von 14 mm, aufweisen und/oder eine Erstreckung von zwischen 15% und 35%, insbesondere von in etwa 25%, des Umfangs des Wellrohrs aufweisen. Eine Markierung, welche in Umfangsrichtung des Wellrohrs derart ausgelegt ist, kann eine gute Erkennbarkeit beim Verwenden eines Scanners zum Erfassen der Markierung gewährleisten. Zum Beispiel können Markierungen, welche sich um über mehr als 50% des Umfangs des Wellrohrs erstrecken, nicht vollständig aus einer einzelnen Relativposition zwischen Scanner und Wellrohr erfasst werden, sondern es kann erforderlich sein, dass der Scanner in Umfangsrichtung um das Wellrohr geführt werden muss.

Alternativ oder zusätzlich kann eine jeweilige Markierung entlang der axialen Richtung des Wellrohrs eine Erstreckung von zwischen 3 mm und 15 mm, insbesondere von 6 mm, aufweisen. Es hat sich gezeigt, dass die Erkennbarkeit von Markierungen, welche sich in der axialen Richtung des Wellrohrs über einen deutlich größeren Bereich als 15 mm erstrecken, durch einen Scanner bei einem gekrümmten Wellrohr abnehmen kann, so dass eine entsprechende axiale Erstreckung eine Erkennbarkeit gewährleisten kann.

Das Wellrohr kann, in Umfangsrichtung des Wellrohrs betrachtet, wenigstens zwei Markierungen aufweisen, welche sich insbesondere im Wesentlichen über einen gleichen axialen Abschnitt des Wellrohrs erstrecken. Dies kann es ermöglichen, dass eine jeweilige Markierung unabhängig von einer Zugangsrichtung zu dem Wellrohr, in dessen Umfangsrichtung betrachtet, erfasst werden kann. Vorteilhafterweise kann das Wellrohr in Umfangsrichtung drei Markierungen aufweisen. Dabei kann es ferner vorgesehen sein, dass die Markierungen, welche an einem gleichen axialen Abschnitt des Wellrohrs in Umfangsrichtung verteilt sind, zueinander identisch sind.

Ferner kann ein Abstand zwischen zwei in der axialen Richtung des Wellrohrs benachbarten Markierungen höchstens 20 cm, insbesondere höchstens 10 cm, betragen. Dadurch, dass ein Abstand zwischen zwei in der axialen Richtung des Wellrohrs benachbarten Markierungen, im Verhältnis zu einer gesamten Länge des Wellrohrs, klein gehalten wird, kann beispielsweise für den Fall, dass das Wellrohr bereits gemäß seinem Verwendungszweck installiert worden ist und nachträglich durch Entfernen einer Einbettung auf das Wellrohr zugegriffen wird, ermöglicht werden, dass sich in dem freigelegten Bereich stets eine Markierung befindet.

Insbesondere kann das Wellrohr ein Material umfassen, welches wenigstens ein Additiv, insbesondere Rußpartikel, aufweist. Die von einem Laserstrahl in das Material des Wellrohrs eingebrachte Energie kann das Additiv, insbesondere die Rußpartikel, derart umwandeln, dass eine lokal begrenzte Farbveränderung in dem Material des Wellrohrs stattfindet, wodurch eine entsprechende Markierung erzeugt werden kann. Das heißt, eine Markierung, z.B. ein Barcode, kann in ihrem Erscheinen einen farblichen Kontrast zur Farbe des Wellohres bilden. Bei hellen Rohren, z.B. weiß, kann die Markierung bevorzugt in schwarz erfolgen, was z.B. mittels eines Karbonisierungsverfahrens des Kunststoffes erreicht werden kann. Bei dunklen Rohren, z.B. schwarz, kann die Markierung bevorzugt in weiß bzw. transparent erfolgen, was durch ein Aufschäumverfahren (Verdampfen des Kohlenstoffs, insbesondere des Additivs) erreicht werden kann.

Die Abfolge von Wellenbergen und Wellentälern kann ein trapezförmiges Wellenprofil ausbilden, dessen Wellenberge und Wellentäler gerade, sich im Wesentlichen parallel zu der Haupterstreckungsrichtung des Kanals erstreckende Abschnitte aufweisen, wobei sich die Flanken zwischen jeweils einem Wellenberg und einem Wellental im Wesentlichen gerade erstrecken. Auf diese Weise können diejenigen Bereiche vergrößert werden, welche dazu eingerichtet sind, mit einer Markierung versehen zu werden.

Dabei können die Flanken mit den Wellenbergen und den Wellentälern mit tangentialen Radien verbunden sein, wobei ein Winkel zwischen einer jeweiligen Flanke und einem angrenzenden Wellenberg bzw. Wellental wenigstens 93 Grad, insbesondere wenigstens 95 Grad, betragen kann.

Generell ist es auch denkbar, dass der Winkel zwischen den Flanken und den Wellenbergen/Wellentälern 90 Grad betragen kann, jedoch kann hierbei die Oberfläche des Wellrohrs beim Entfernen aus einem Korrugator beschädigt werden. Dies kann durch das Vorsehen von schräg verlaufenden Flanken im Sinne von Entformungsschrägen verhindert werden. Der Winkel von wenigstens 93 Grad bzw. wenigstens 95 Grad ist dabei zwischen einer Erstreckungsrichtung der Flanke in einer näherungsweise radialen Richtung des Wellrohrs und der Haupterstreckungsrichtung des Wellrohrs bzw. einer Parallelen dazu zu messen. Alternativ könnte dieser Winkel auch mit 3 Grad bzw. 5 Grad Verkippung zu einer gedachten 90°-Flanke angegeben werden.

Vorteilhafterweise kann jede Markierung eines jeweiligen einzelnen Wellrohrs eine eineindeutige Information, insbesondere eine Positionsangabe dieser Markierung, bereitstellen. Angenommen, dass ein einzelnes Wellrohr, welches zum Beispiel auf einen Ring aufgewickelt ist, alle 10 cm eine Markierung aufweist, so könnte eine erste Markierung dieses Wellrohrs die Positionsangabe "10 cm" oder "0,1 m" umfassen, eine zweite Markierung "20 cm" bzw. "0,2 m, eine dritte Markierung "30 cm" bzw. "0,3 m" usw. Wird das einzelne Wellrohr nun in mehrere kürzere Teil-Wellrohre zerschnitten, so kann beispielsweise ein erstes Teil-Wellrohr die Markierungen von "0,1 m" bis "1 m", ein zweites Teil-Wellrohr die Markierungen von "1,1 m" bis "3,2 m" und ein drittes Teil-Wellrohr die Markierungen von "3,3 m" bis 4,5 m" aufweisen. Diese ersten bis dritten Teil-Wellrohre können nun gemäß einem Installationsplan verlegt und mit Anschlussdosen verbunden werden, welche beispielsweise ebenfalls mit einer digital auslesbaren Codierung versehen sind. Durch Scannen einer jeweiligen Anschlussdose und einer dieser benachbarten Markierung eines entsprechenden Teil-Wellrohrs kann in einem Installationsplan dokumentiert werden, von welcher Anfang-Markierung (beispielsweise "1,1 m" für das zweite Teil-Wellrohr) bis zu welcher End-Markierung (beispielsweise "3,2 m" für das zweite Teil-Wellrohr) sich ein entsprechendes Teil-Wellrohr zwischen zwei Anschlussdosen erstreckt. Sollte ein entsprechender Abschnitt eines Teil-Wellrohrs zu einem späteren Zeitpunkt absichtlich oder versehentlich freigelegt werden, so kann eine beliebige Markierung erfasst werden (beispielsweise die Markierung für "2,0 m") und sofort erkannt werden, um welchen Abschnitt, das heißt um welche Position an welcher Leitung, des Installationsplans es sich dabei handelt, in diesem Fall nämlich das zweite Teil-Wellrohr.

In einem Aspekt, welcher nicht unter die vorliegende Erfindung fällt, wird die eingangs erwähnte Aufgabe durch ein Mantelrohr gelöst, welches in seinem Inneren einen Kanal definiert, umfassend
ein Wellrohr aus Kunststoff, dessen Wandung, in einer axialen Richtung entlang einer Haupterstreckungsrichtung des Kanals betrachtet, eine Abfolge von Wellenbergen und Wellentälern aufweist, wobei jeweils ein Wellenberg und ein diesem benachbartes Wellental durch eine Flanke verbunden sind, und
eine an der Außenseite des Wellrohrs angeordnete Mantelschicht aus Kunststoff, welche die Außenseite des Wellrohrs nur im Bereich der Wellenberge kontaktiert,
wobei das Mantelrohr an seiner Außenseite eine Mehrzahl von Markierungen aufweist, welche jeweils eine digital auslesbare Codierung umfassen, und
wobei die Markierungen unter Verwendung eines Laserbeschriftungsverfahrens aufgebracht sind.

Da bei dem Mantelrohr die äußere Mantelschicht den Verlauf von Wellenbergen und Wellentälern des inneren Wellrohrs lediglich sehr schwach nachbildet, das heißt die äußere Mantelschicht kann zwar im Bereich der Wellenberge mit dem Wellrohr in Kontakt stehen, aber einen Bereich eines Wellentals derart überbrücken, dass zwei zueinander benachbarte Wellenberge in einer viel kürzeren Distanz verbunden werden als dies bei dem Wellrohr der Fall ist. Dies kann zur Folge haben, dass in der Mantelschicht ein Wellenberg direkt in ein Wellental und dann wiederum in einen nächsten Wellenberg übergeht, ohne dass dazwischen klare Flanken ausgebildet sind, bzw. dass die Flanken derart flach verlaufen, dass auch in diesem Bereich eine Markierung unter Verwendung eines Laserbeschriftungsverfahrens erzeugt werden kann.

Wie zu erkennen ist, kann das erfindungsgemäße Mantelrohr eine Alternative zu dem erfindungsgemäßen Wellrohr darstellen, wobei, soweit anwendbar, dennoch darauf hingewiesen werden soll, dass sämtliche mit Bezug auf das erfindungsgemäße Wellrohr offenbarten Merkmale, Vorteile und Effekte auch auf das erfindungsgemäße Mantelrohr anwendbar sein können, und umgekehrt. Dies soll insbesondere, aber nicht darauf begrenzt, für die Art und die Informationen der Markierungen gelten.

Vorteilhafterweise kann die Mantelschicht ein thermoplastisches Olefin (TPO) und/oder wenigstens ein Additiv umfassen, wobei das Additiv insbesondere Rußpartikel umfassen kann. Wie bereits mit Bezug auf das erfindungsgemäße Wellrohr beschrieben, kann die durch den Laserstrahl eingebrachte Energie das Material der Mantelschicht, insbesondere die Rußpartikel, derart verändern, dass eine sichtbare, beispielsweise zu dem Material des Wellrohrs farblich unterschiedliche, Markierung in dem Material der Mantelschicht erzeugt werden kann.

Die vorliegende Erfindung soll im Folgenden in größerem Detail mit Bezug auf die begleitenden Zeichnungen erläutert werden, in welchen:
- Figur 1: einen Teilabschnitt eines erfindungsgemäßen Wellrohrs zeigt;
- Figur 2: eine Vergrößerung des erfindungsgemäßen Wellrohrs aus Figur 1 zeigt; und
- Figur 3: einen Schnitt durch die Wandung des erfindungsgemäßen Wellrohrs aus Figur 1 zeigt.

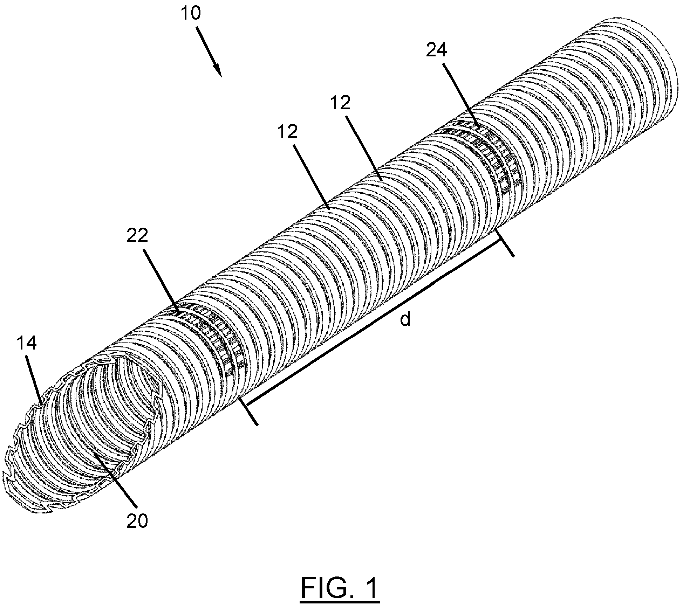

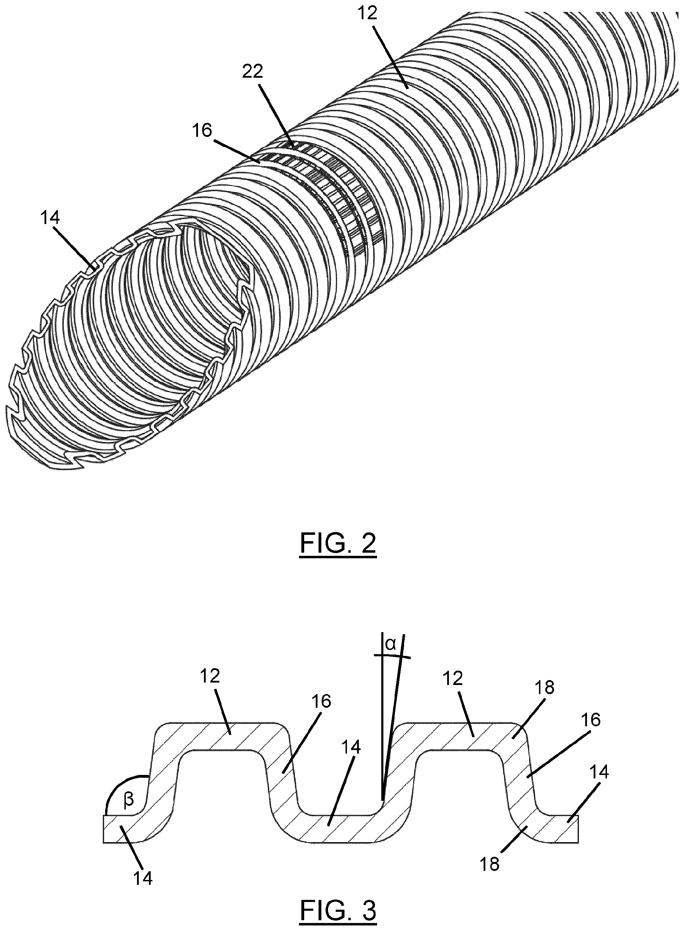

In Figur 1 ist ein erfindungsgemäßes Wellrohr allgemein mit dem Bezugszeichen 10 bezeichnet. Das erfindungsgemäße Wellrohr weist eine Abfolge von Wellenbergen 12 und Wellentälern 14 auf. Zwischen einem Wellenberg 12 und einem jeweiligen benachbarten Wellental 14 erstreckt sich eine Flanke 16 (siehe hierzu auch Figuren 2 und 3). Eine Flanke 16 verläuft sowohl in einen Wellenberg 12 als auch in ein Wellental 14 über eine jeweilige Verrundung 18 bzw. hier einen tangentialen Radius 18. Das Profil des Wellrohrs verläuft im Wesentlichen trapezförmig, das heißt ein Wellenberg 12 verläuft über einen gewissen Abschnitt im Wesentlichen parallel zu einer Haupterstreckungsrichtung des Wellrohrs 10 bzw. parallel zu einer Haupterstreckungsrichtung eines Kanals 20, welcher durch das Innere des Wellrohrs 10 definiert ist. Über eine entsprechende Verrundung 18 verläuft die Wandung des Wellrohrs 10 dann von einem Wellenberg 12 in eine im Wesentlichen geradlinig verlaufende Flanke 16, welche in dem hier dargestellten Ausführungsbeispiel zu einer radialen Richtung um einen Winkel α, welcher beispielsweise 5° beträgt, geneigt ist (siehe Figur 3). Alternativ könnte zur Angabe einer Schrägstellung der Flanken 16 auch ein Winkel β zwischen einem Wellental 14 bzw. der Haupterstreckungsrichtung des Kanals 20 und einer Flanke 16 gemessen werden, welcher in diesem Beispiel 95° beträgt (siehe ebenfalls Figur 3).

Wie in Figur 1 zu erkennen ist, weist das Wellrohr 10 eine erste Markierung 22 und eine zweite Markierung 24 auf, welche sich in einer axialen Richtung des Wellrohrs 10 in einem Abstand d, beispielsweise 10 cm, von der ersten Markierung 22 befindet. Beide Markierungen 22 und 24 sind hier als Barcode ausgebildet, dessen Balken sich im Wesentlichen in der axialen Richtung des Wellrohrs 10 erstrecken, und welcher sich in Umfangsrichtung des Wellrohrs 10 über einen gewissen Bereich erstreckt.

Die erste Markierung 22 kann beispielsweise Informationen über ihre Position von einem ursprünglichen Anfang des Wellrohrs 10, zum Beispiel "1,1 m", umfassen, wobei die zweite Markierung 22 eine entsprechende davon abweichende Information bezüglich ihrer Position umfassen kann, wie beispielsweise "1,2 m".

Mit Bezug auf Figur 2 ist zu erkennen, dass die Markierungen (hier die erste Markierung 22) lediglich auf Bereichen des Wellrohrs 10 aufgebracht ist, welche sich im Wesentlichen parallel zu der Haupterstreckungsrichtung des Wellrohrs 10 erstrecken, nämlich den Wellenbergen 12, den Wellentälern 14 und bis zu einem gewissen Ausmaß den Verrundungen 18. Die Flanken 16 hingegen sind frei von einer entsprechenden Markierung. Dies kann insbesondere auf die Erzeugung der Markierung 22 auf dem Wellrohr 10 unter Verwendung eines Laserbeschriftungsverfahrens hinweisen.

Durch Erfassen einer jeweiligen Markierung 22, 24, zum Beispiel unter Verwendung eines Scanners, kann eindeutig bestimmt werden, an welcher Position des Wellrohrs 10 man sich befindet. Kombiniert man diese Informationen mit einem Installationsplan, in welchem zumindest eine erste und eine letzte Markierung eines jeden einer Mehrzahl von Wellrohren erfasst ist, so kann bei einer späteren Erfassung einer einzelnen Markierung eindeutig eine Position in dem Installationsplan erkannt werden.

## Patentansprüche

1. Wellrohr (10) aus Kunststoff, welches in seinem Inneren einen Kanal (20) definiert,
wobei eine Wandung des Wellrohrs (10), in einer axialen Richtung entlang einer Haupterstreckungsrichtung des Kanals (20) betrachtet, eine Abfolge von Wellenbergen (12) und Wellentälern (14) aufweist,
wobei jeweils ein Wellenberg (12) und ein diesem benachbartes Wellental (14) durch eine Flanke (16) verbunden sind,
wobei das Wellrohr (10) an seiner Außenseite eine Mehrzahl von Markierungen (22, 24) aufweist, welche jeweils eine digital auslesbare Codierung umfassen, und
wobei die Flanken (16) im Wesentlichen frei von derartigen Markierungen (22, 24) sind,
**dadurch gekennzeichnet, dass** die Markierungen (22, 24) unter Verwendung eines Laserbeschriftungsverfahrens aufgebracht sind und dass sich eine jeweilige Markierung (22, 24) in axialer Richtung des Wellrohrs (10) über wenigstens einen Wellenberg (12) und wenigstens ein Wellental (14) und in Umfangsrichtung des Wellrohrs (10) wenigstens abschnittsweise erstreckt.

2. Wellrohr (10) nach einem der vorhergehenden Ansprüche,
**dadurch gekennzeichnet, dass** die digital auslesbare Codierung einen Barcode umfasst.

3. Wellrohr (10) nach dem vorhergehenden Anspruch,
**dadurch gekennzeichnet, dass** wenigstens einer der Balken des Barcodes aus einer Mehrzahl von Einzellinien zusammengesetzt ist.

4. Wellrohr (10) nach einem der vorhergehenden Ansprüche, **dadurch gekennzeichnet, dass** eine jeweilige Markierung (22, 24) entlang der Umfangsrichtung des Wellrohrs (10) eine Erstreckung von zwischen 10 mm und 20 mm, insbesondere von 14 mm, aufweist und/oder eine Erstreckung von zwischen 15% und 35%, insbesondere von in etwa 25%, des Umfangs des Wellrohrs (10) aufweist.

5. Wellrohr (10) nach einem der vorhergehenden Ansprüche, **dadurch gekennzeichnet, dass** eine jeweilige Markierung (22, 24) entlang der axialen Richtung des Wellrohrs (10) eine Erstreckung von zwischen 3 mm und 15 mm, insbesondere von 6 mm, aufweist.

6. Wellrohr (10) nach einem der vorhergehenden Ansprüche, **dadurch gekennzeichnet, dass** das Wellrohr (10), in Umfangsrichtung des Wellrohrs (10) betrachtet, wenigstens zwei Markierungen (22, 24) aufweist, welche sich insbesondere im Wesentlichen über einen gleichen axialen Abschnitt des Wellrohrs (10) erstrecken.

7. Wellrohr (10) nach einem der vorhergehenden Ansprüche, **dadurch gekennzeichnet, dass** ein Abstand (d) zwischen zwei in der axialen Richtung des Wellrohrs (10) benachbarten Markierungen (22, 24) höchstens 20 cm, insbesondere höchstens 10 cm, beträgt.

8. Wellrohr (10) nach einem der vorhergehenden Ansprüche, **dadurch gekennzeichnet, dass** das Wellrohr (10) ein Material umfasst, welches wenigstens ein Additiv, insbesondere Rußpartikel, aufweist.

9. Wellrohr (10) nach einem der vorhergehenden Ansprüche, **dadurch gekennzeichnet, dass** die Abfolge von Wellenbergen (12) und Wellentälern (14) ein trapezförmiges Wellenprofil ausbildet, dessen Wellenberge (12) und Wellentäler (14) gerade, sich im Wesentlichen parallel zu der Haupterstreckungsrichtung des Kanals (20) erstreckende Abschnitte aufweisen, wobei sich die Flanken (16) zwischen jeweils einem Wellenberg (12) und einem Wellental (14) im Wesentlichen gerade erstrecken.

10. Wellrohr (10) nach dem vorhergehenden Anspruch, **dadurch gekennzeichnet, dass** die Flanken (16) mit den Wellenbergen (12) und den Wellentälern (14) mit tangentialen Radien (18) verbunden sind, wobei ein Winkel (α, β) zwischen einer jeweiligen Flanke (16) und einem angrenzenden Wellenberg (12) bzw. Wellental (14) wenigstens 93 Grad, insbesondere wenigstens 95 Grad, beträgt.

11. Wellrohr (10) nach einem der vorhergehenden Ansprüche, **dadurch gekennzeichnet, dass** jede Markierung (22, 24) eines jeweiligen einzelnen Wellrohrs (10) eine eineindeutige Information, insbesondere eine Positionsangabe dieser Markierung (22, 24), bereitstellt.

## Claims

1. Corrugated pipe (10) made of plastics material which defines a duct (20) in its interior,
a wall of the corrugated pipe (10), when viewed in an axial direction in a main direction of extension of the duct (20), comprising a series of peaks (12) and troughs (14),
one peak (12) and one trough (14) adjacent thereto being connected by a flank (16), the corrugated pipe (10) comprising a plurality of markings (22, 24) on its outer face which each contain a digitally readable code, and
the flanks (16) being substantially free of such markings (22, 24),
**characterised in that** the markings (22, 24) are applied using a laser-based labelling process, and **in that** each marking (22, 24) extends over at least one peak (12) and at least one trough (14) in the axial direction of the corrugated pipe (10) and at least in portions in the circumferential direction of the corrugated pipe (10).

2. Corrugated pipe (10) according to any of the preceding claims,
**characterised in that** the digitally readable code contains a bar code.

3. Corrugated pipe (10) according to the preceding claim,
**characterised in that** at least one of the bars of the bar code is composed of a plurality of individual lines.

4. Corrugated pipe (10) according to any of the preceding claims,
**characterised in that** one marking (22, 24) has an extension of between 10 mm and 20 mm, in particular of 14 mm, in the circumferential direction of the corrugated pipe (10) and/or has an extension of between 15% and 35%, in particular of approximately 25%, of the circumference of the corrugated pipe (10).

5. Corrugated pipe (10) according to any of the preceding claims,
**characterised in that** one marking (22, 24) has an extension of between 3 mm and 15 mm, in particular of 6 mm, in the axial direction of the corrugated pipe (10).

6. Corrugated pipe (10) according to any of the preceding claims, **characterised in that** the corrugated pipe (10), when viewed in the circumferential direction of the corrugated pipe (10), comprises at least two markings (22, 24) which in particular extend substantially over the same axial portion of the corrugated pipe (10).

7. Corrugated pipe (10) according to any of the preceding claims, **characterised in that** a distance (d) between two markings (22, 24) that are adjacent in the axial direction of the corrugated pipe (10) is at most 20 cm, in particular at most 10 cm.

8. Corrugated pipe (10) according to any of the preceding claims, **characterised in that** the corrugated pipe (10) comprises a material which contains at least one additive, in particular carbon black particles.

9. Corrugated pipe (10) according to any of the preceding claims, **characterised in that** the series of peaks (12) and troughs (14) forms a trapezoidal corrugated profile, the peaks (12) and troughs (14) of which comprise straight portions extending substantially in parallel with the main direction of extension of the duct (20), the flanks (16) between each peak (12) and trough (14) extending in a substantially straight manner.

10. Corrugated pipe (10) according to the preceding claim,
**characterised in that** the flanks (16) are connected to the peaks (12) and the troughs (14) by tangential radii (18), an angle (α, β) between one flank (16) and an adjacent peak (12) or trough (14) being at least 93 degrees, in particular at least 95 degrees.

11. Corrugated pipe (10) according to any of the preceding claims, **characterised in that** each marking (22, 24) of one single corrugated pipe (10) provides a unique piece of information, in particular an indication of the position of this marking (22, 24).

## Revendications

1. Tube ondulé (10) en matière plastique, qui définit à l'intérieur un canal (20), dans lequel
une paroi du tube ondulé (10), vue dans une direction axiale le long d'une direction d'extension principale du canal (20), présente une succession de crêtes (12) et de creux (14),
une crête (12) et un creux (14) voisin de celle-ci sont reliés par un flanc respectif (16),
le tube ondulé (10) présente, sur sa face extérieure, une pluralité de marquages (22, 24) qui comprennent chacun un codage à lecture numérique, et
les flancs (16) sont sensiblement exempts de tels marquages (22, 24), **caractérisé en ce que** les marquages (22, 24) sont appliqués en utilisant un procédé de marquage au laser, et
**en ce qu'**un marquage respectif (22, 24) s'étend, dans la direction axiale du tube ondulé (10), sur au moins une crête (12) et sur au moins un creux (14) et, dans la direction circonférentielle du tube ondulé (10), sur au moins certains tronçons.

2. Tube ondulé (10) selon la revendication précédente,
**caractérisé en ce que** le codage à lecture numérique comprend un code à barres.

3. Tube ondulé (10) selon la revendication précédente,
**caractérisé en ce que** l'une au moins des barres du code à barres est composée d'une pluralité de lignes individuelles.

4. Tube ondulé (10) selon l'une des revendications précédentes, **caractérisé en ce qu'**un marquage respectif (22, 24) présente, le long de la direction circonférentielle du tube ondulé (10), une extension comprise entre 10 mm et 20 mm, en particulier de 14 mm, et/ou une extension comprise entre 15 % et 35 %, en particulier d'environ 25 %, de la circonférence du tube ondulé (10).

5. Tube ondulé (10) selon l'une des revendications précédentes, **caractérisé en ce qu'**un marquage respectif (22, 24) présente, le long de la direction axiale du tube ondulé (10), une extension comprise entre 3 mm et 15 mm, en particulier de 6 mm.

6. Tube ondulé (10) selon l'une des revendications précédentes, **caractérisé en ce que** le tube ondulé (10) présente, vu dans la direction circonférentielle du tube ondulé (10), au moins deux marquages (22, 24) qui s'étendent en particulier sensiblement sur un même tronçon axial du tube ondulé (10).

7. Tube ondulé (10) selon l'une des revendications précédentes, **caractérisé en ce qu'**une distance (d) entre deux marquages (22, 24) voisins dans la direction axiale du tube ondulé (10) est de 20 cm au maximum, en particulier de 10 cm au maximum.

8. Tube ondulé (10) selon l'une des revendications précédentes, **caractérisé en ce que** le tube ondulé (10) comprend un matériau qui contient au moins un additif, en particulier des particules de noir de carbone.

9. Tube ondulé (10) selon l'une des revendications précédentes, **caractérisé en ce que** la succession de crêtes (12) et de creux (14) forme un profil d'onde trapézoïdal dont les crêtes (12) et les creux (14) présentent des tronçons rectilignes s'étendant sensiblement parallèlement à la direction d'extension principale du canal (20), les flancs (16) s'étendant sensiblement en ligne droite entre une crête (12) et un creux (14) respectifs.

10. Tube ondulé (10) selon la revendication précédente,
**caractérisé en ce que** les flancs (16) sont reliés aux crêtes (12) et aux creux (14) par des rayons tangentiels (18), un angle (a, β) entre un flanc respectif (16) et une crête (12) ou un creux (14) adjacent(e) étant de 93 degrés au minimum, en particulier de 95 degrés au minimum.

11. Tube ondulé (10) selon l'une des revendications précédentes, **caractérisé en ce que** chaque marquage (22, 24) d'un tube ondulé (10) individuel respectif fournit une information univoque, en particulier une indication de position de ce marquage (22, 24).
